# EUROPEAN PATENT SPECIFICATION

(11) **EP 2 643 558 B1**
(45) Date of publication and mention of the grant of the patent: **30.12.2020**
(21) Application number: 11785409.1
(22) Date of filing: 18.11.2011
(51) Int. Cl.: F01K 3/08, F01K 7/16, F01K 9/00, F01K 13/02, F28D 17/02, F28D 20/02

(54) **TURBINE BYPASS SYSTEM**
BYPASSSYSTEM FÜR TURBINE
CIRCUIT DE CONTOURNEMENT GLOBAL DE TURBINE

(30) Priority: 27.11.2010 GB 201020144
(43) Date of publication of application: 02.10.2013
(73) Proprietor: General Electric Technology GmbH, 5400 Baden (CH)
(72) Inventor: TOTHILL, Mark Harvey, Bedfordshire MK 43 0EB (GB)
(74) Representative: BRP Renaud & Partner mbB Rechtsanwälte Patentanwälte Steuerberater
(86) International application number: PCT/EP2011/070429
(87) International publication number: WO 2012/069369

(56) References cited:
- WO-A1-2009/082713
- WO-A2-2008/091381
- CH-A5- 598 535
- DE-A1- 4 121 460
- DE-C1- 3 841 708
- GB-A- 2 453 849
- US-A- 3 977 197

## Description

### Technical Field

Embodiments of the present invention relate to a turbine bypass system and to a method for operating a turbine bypass system.

### Technical background

In some thermal power plants that generate high pressure, high temperature gas or steam that is passed through a turbine to generate power, the flow of hot gases to the turbine cannot be instantaneously reduced or prevented by simply controlling the gas generator. In a steam turbine power plant for example, the steam generator (boiler) cannot be shut down and re-started instantaneously. In the event of shutdown of the turbine in a thermal power plant, for example during load rejection, a turbine bypass system is, therefore, needed to prevent the admission of hot gases (such as steam) into the turbine.

Known turbine bypass systems include a gas cooler which cools the bypass gases. The components of the gas cooler are subjected to severe thermal stresses during initial operation of the bypass system due to the large temperature difference between the hot bypass gases and the relatively cool components of the gas cooler. Mechanical failure of the components is, therefore, common.

Documents WO2009082713 A1, WO2008091381 A2, US3977197 A and DE4121460 A1 disclose turbine bypass systems with pebble beds. In particular the system of DE4121460 A1 is provided with a Ruth type accumulator which is provided downstream of the pebble bed.

Attempts have been made to reduce the temperature of the bypass gases before delivery to the gas cooler, but component failure has still been encountered. There is, therefore, a need for an improved turbine bypass system.

### Summary of the Invention

As used in this Summary and in the appended claims, unless "steam" is specifically mentioned, the word "gas" should be understood to include steam in both its vapour and gaseous states.

According to a first aspect of the present invention, which is defined by the features of claim 1, there is provided a turbine bypass system comprising: -
a gas turbine;
a bypass path selectively operable to deliver hot gases to a gas cooler; and
a pebble bed positioned in the bypass path upstream of the gas cooler which is operable to absorb heat from the bypass gases and thereby reduce the temperature of the bypass gases prior to delivery of the bypass gases to the gas cooler.

According to a second aspect of the present invention, which is defined my the features of claim 6, there is provided a method for operating a turbine bypass system comprising:-
delivering hot gases along a bypass path to a gas cooler; and
passing the bypass gases through a pebble bed, positioned in the bypass path upstream of the gas cooler, to absorb heat from the bypass gases and thereby reduce the temperature of the bypass gases prior to delivery of the bypass gases to the gas cooler.

The gas cooler is subjected to much lower temperatures, and therefore reduced thermal stresses, during initial operation of the turbine bypass system due to the fact that the temperature of the bypass gases is reduced by the pebble bed.

The temperature of the pebble bed increases gradually as bypass gases flow through the pebble bed and the amount of heat absorbed from the bypass gases by the pebble bed thus decreases gradually. As a result, the temperature of the bypass gases that are delivered along the bypass path, from the pebble bed to the gas cooler, gradually increases. This gradual temperature increase provides a gradual increase in the temperature of the components of the gas cooler, thereby reducing instantaneous thermal stresses and the resultant likelihood of mechanical failure of the gas cooler components during initial operation of the turbine bypass system.

The pebble bed may comprise a low alloy steel shell lined with common refractory material such as firebrick with an inner lining of super refractory material such as silicon carbide, mullite, or alumina. The pebbles of, for example, 12mm to 30mm in diameter, are also formed of solid super-refractory material.

The pebbles may be supported on a perforated layer comprising a high alloy steel platform, which itself may be supported on high alloy steel bearers. Alternatively, or additionally, the platform may be upwardly convex (domed) for better support of the weight of the pebbles. As a further alternative, for reduced cost and maintenance, the pebble bed may be supported by a perforated dome of super refractory material formed into tapered bricks arranged in ring formation. In this case grooves in the sides of the assembled bricks form holes for the passage of the hot bypass gases therethrough.

The perforated support layer may also perform as a baffle in order to diffuse the bypass gases more evenly over the lateral extent of the pebble bed. For example, the apertures in the support layer may be smaller in the middle than near the edges of the pebble bed.

The turbine bypass system may include a cooling arrangement which is selectively operable to cool the pebble bed. The cooling arrangement is typically operable to cool the pebble bed when the bypass path is inoperative. The pebble bed is, thus, cooled after completion of a bypass operation when bypass gases are not flowing along the bypass path through the pebble bed.

The cooling arrangement may be selectively operable to deliver fluid coolant to the pebble bed to cool the pebble bed. The fluid coolant may be liquid coolant, such as water or liquid nitrogen, and/or gas coolant, such as steam or nitrogen gas.

Where the turbine is a steam turbine, the cooling arrangement may be operable to deliver gas coolant, preferably relatively low temperature steam, to the pebble bed and may thereafter be operable to deliver liquid coolant, such as water, to the pebble bed. The pebble bed may include a condensate drain for removing any condensate produced during heating and cooling cycle of the pebble bed. Furthermore, the gas cooler may include a condenser, typically a steam dump condenser.

In the case where the turbine is a gas turbine, the cooling arrangement may comprise a closed-loop cooling circuit for recirculating the fluid coolant to the pebble bed and may include a heat exchanger for cooling the recirculating fluid coolant. The fluid coolant used in the closed-loop cooling circuit may be a gas, a typical example being nitrogen gas. Furthermore, the gas cooler may comprise a heat exchanger, e.g., a waste heat recovery device.

The aforesaid method for operating the turbine bypass system may further comprise cooling the pebble bed. The step of cooling the pebble bed may be carried out when gases are not delivered along the bypass path to the gas cooler. As indicated above, this enables the pebble bed to be cooled after completion of a bypass operation when bypass gases are not flowing along the bypass path through the pebble bed.

The step of cooling the pebble bed may comprise delivering fluid coolant to the pebble bed.

In one embodiment of the method, the step of cooling the pebble bed comprises initially delivering gas coolant, such as steam, to the pebble bed and thereafter delivering liquid coolant, such as water, to the pebble bed. This results in a two-stage cooling process in which the initial gas cooling step cools the pebble bed to an intermediate temperature and the subsequent liquid cooling step provides further cooling of the pebble bed.

In another embodiment of the method, the step of cooling the pebble bed comprises recirculating fluid coolant to the pebble bed and may comprise extracting heat from the fluid coolant using a heat exchanger. As indicated above, the recirculating fluid coolant used is normally a gas coolant, such as nitrogen gas.

### Brief Description of the Drawings

Embodiments of the present invention will now be described by way of example only and with reference to the accompanying drawings, in which:
Figure 1 is diagrammatic view of a turbine bypass system not embodying the invention; and
Figure 2 is a diagrammatic view of an embodiment of an inventive turbine bypass system.

### Detailed Description of Embodiments of the Invention

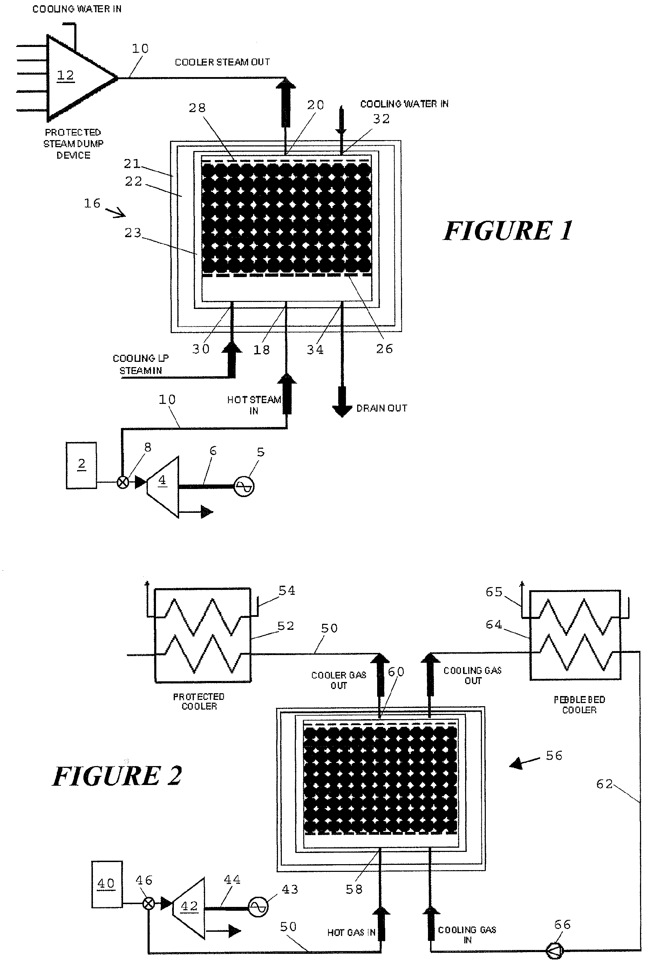

Figure 1 illustrates a bypass system forming part of a thermal power plant employing a steam generator 2 that feeds high pressure, high temperature steam to steam turbine 4 for power production in electrical generator 5, which is driven by turbine 4 through shaft 6. The steam turbine bypass system is used to divert superheated steam produced in a steam generator 2 away from the inlet of a steam turbine 4, for example during emergency turbine shutdown (also known as turbine trip). Turbine 4 may comprise multi-stage high pressure and low pressure modules, but these are not shown for convenience of illustration.

The steam turbine bypass system includes a diverter valve 8, a bypass path 10 for diverting steam away from the steam turbine inlet, and a gas cooler 12 in the form of a steam dump condenser. Steam is delivered along the bypass path 10 to the steam dump condenser 12 which, as known, includes a cooling water inlet 14.

To reduce thermal shock to the condenser 12, the steam turbine bypass system includes a pebble bed 16, which would be constructed as a cylindrical pressure vessel with domed upper and lower ends, although it is only illustrated diagrammatically in Figure 1. The pebble bed 16 is positioned in the bypass path 10 upstream of the steam dump condenser 12 and includes a steam inlet 18 for receiving superheated bypass steam from the steam generator and a steam outlet 20 via which steam is delivered from the pebble bed 16 to the steam dump condenser 12.

During a bypass operation, superheated bypass steam is delivered along the bypass path 10 and into the pebble bed 16 via the steam inlet 18. As the superheated bypass steam passes through the pebble bed 16, heat is absorbed from the steam by the pebble bed 16 and this reduces the temperature of the bypass steam. The cooled bypass steam is delivered via the steam outlet 20 to the steam dump condenser 12 where the bypass steam is cooled further in a conventional manner.

At the start of a steam bypass operation, the pebble bed 18 is at its coolest temperature and absorbs a significant amount of heat from the bypass steam. The temperature of the bypass steam is, thus, reduced significantly before the bypass steam is delivered along the bypass path 10, via the steam outlet 20, to the steam dump condenser 12. The components of the steam dump condenser 12, which are at their lowest temperature at the start of the bypass operation, are thus subjected to much lower temperatures, and therefore reduced thermal stresses, at the start of the bypass operation due to the fact that the temperature of the bypass steam is reduced by the pebble bed 16.

As bypass steam continues to flow along the bypass path 10 through the pebble bed 16, the temperature of the pebble bed 16 increases as it absorbs heat from the bypass steam. The temperature difference between the pebble bed 18 and the bypass steam thus gradually decreases. This reduces the heat absorption capability of the pebble bed 16 and results in a gradual increase in the temperature of the bypass steam that is delivered along the bypass path 10, via the steam outlet 20, to the steam dump condenser 12. This gradual increase in the temperature of the bypass steam leads to a gradual increase in the temperature of the components of the steam dump condenser 12, thereby reducing thermal stresses and the resultant likelihood of mechanical failure of the steam dump condenser 12 components.

The pebble bed 16 will eventually attain the same temperature as the bypass steam, at which point heat will no longer absorbed by the pebble bed 16 such that the temperature of the bypass steam will be substantially equal at the steam inlet 18 and the steam outlet 20. The temperature of the bypass steam delivered along the bypass path 10 to the steam dump condenser 12 will, therefore, be substantially equal to the temperature of the steam produced by the steam generator. By this point, however, the components of the steam dump condenser 12 have gradually heated up ensuring that thermal fatigue of the components is minimised.

The pebble bed 16 comprises a low alloy steel shell 21 lined with common refractory material 22 such as firebrick with an inner lining 23 of super refractory material such as silicon carbide, mullite, or alumina. The pebbles 24 are also formed of solid super-refractory material and may be, e.g., between 12mm and 30mm in diameter.

The pebbles 24 are supported on a perforated support layer 26 comprising a high alloy steel platform, which may itself be supported on high alloy steel bearers (not shown). The perforated support layer 26 also acts as a baffle in order to diffuse the bypass steam more evenly over the lateral extent of the pebbles 24 in the pebble bed 16, and to this end the apertures in the support layer 26 may be smaller in the middle than near the edges, as indicated in diagrammatic fashion. A perforated upper layer 28, similar to the perforated support layer 26, is also provided above the pebbles 24.

An alternative way of supporting the pebble mass within the pebble bed is to use a perforated upwardly convex dome (not shown), which may be formed of the high alloy steel. Alternatively, as already known in the art, a dome to support the pebbles may comprise super refractory material formed into tapered bricks arranged in a ring formation. In the latter arrangement, grooves in the sides of the assembled bricks form holes for the passage of the hot bypass steam through the dome and into the pebbles.

After completion of the bypass operation, when bypass steam is no longer fed along the bypass path 10 through the pebble bed 16 to the steam dump condenser 12, it is necessary to cool the pebble bed 16 so that it is capable of cooling bypass steam during the initial stages of a subsequent bypass operation. The steam turbine bypass system includes a cooling arrangement for this purpose.

The cooling arrangement includes a first fluid coolant inlet 30 at the base of the pebble bed 16 which delivers cooling steam (typically low pressure steam) to the pebble bed 16 and a second fluid coolant inlet 32 at the top of the pebble bed 16 which delivers cooling water to the pebble bed 16. During operation of the cooling arrangement, cooling steam is initially delivered to the pebble bed 16 to cool it to a first temperature before cooling water is subsequently delivered to the pebble bed 16 to cool it further to a desired temperature. The person skilled in power plant design will realise that such cooling steam may usually be obtained from a low-pressure steam source elsewhere in the power plant. The pebble bed 16 includes a drain 34 which removes cooling water and also condensate generated during the cycle of heating and cooling of the pebbles 24.

Figure 2 illustrates a bypass system forming part of a thermal power plant employing a source 40 which generates high pressure, high temperature gas, such as nitrogen. The gas is fed directly to gas turbine 42 for power production in electrical generator 43, which is driven by turbine 42 through shaft 44. The turbine 42 may comprise multi-stage low pressure and high pressure modules, but these are not shown for convenience of illustration. The gas turbine bypass system is used to divert high pressure, high temperature gas, for example air or nitrogen, away from the inlet of the gas turbine 42 , for example during turbine shutdown (also known as turbine trip).

The gas turbine bypass system includes a diverter valve 46, a bypass path 50 for diverting bypass gases away from the gas turbine inlet and a gas cooler 52 in the form of a heat exchanger, which may be part of a waste heat recovery device. Bypass gases are delivered along the bypass path 50 to the heat exchanger 52, which, as known *per se,* includes a cooling circuit 54, fed by a coolant such as water.

The gas turbine bypass system includes a pebble bed 56 which is similar in construction and operation to the pebble bed 16 shown in Figure 1. The pebble bed 56 is positioned in the bypass path 50 upstream of the heat exchanger 52 and includes a gas inlet 58 for receiving hot bypass gases and a gas outlet 60, via which gases are delivered from the pebble bed 56 to the heat exchanger 52.

During a bypass operation, hot bypass gases are delivered along the bypass path 50 and into the pebble bed 56 via the gas inlet 58. As the hot bypass gases pass through the pebble bed 56, heat is absorbed from the gases by the pebble bed 56 and this reduces the temperature of the bypass gases. The cooled bypass gases are delivered via the gas outlet 60 to the heat exchanger 52 where the waste heat may be recovered.

The pebble bed 56 operates in exactly the same manner as the pebble bed 16 to absorb heat from the bypass gases and thereby reduce the temperature of the bypass gases at the start of a bypass operation. As the pebble bed 56 heats up during the bypass operation, the amount of cooling provided by the pebble bed 56 decreases. This has already been described fully with reference to Figure 1 and no further explanation is needed.

After completion of the bypass operation, when bypass gases are no longer fed along the bypass path 50 through the pebble bed 56 to the heat exchanger 52, it is necessary to cool the pebble bed 56 for the reasons already explained above. The gas turbine bypass system includes a cooling arrangement for this purpose.

The cooling arrangement comprises a closed-loop cooling circuit 62, which delivers a recirculating gas coolant, such as nitrogen gas, to the pebble bed. The cooling arrangement includes a heat exchanger 64, which cools the recirculating gas coolant by means of a cooling circuit 65 through which a coolant such as water is passed, as known *per se.* A pump 66 is provided to force the coolant gas around the closed-loop cooling circuit 62.

Although embodiments of the present invention have been described in the preceding paragraphs, it should be understood that various modifications may be made to those embodiments without departing from the scope of the present invention.

## Claims

1. A turbine bypass system, comprising:
a turbine;
a bypass path (10) selectively operable to deliver hot gases to a gas cooler (12); and
a pebble bed (16) positioned in the bypass path (10) upstream of the gas cooler (12) which is operable to absorb heat from the bypass gases and thereby reduce the temperature of the bypass gases prior to delivery of the bypass gases to the gas cooler (12),
**characterized in that** the turbine bypass system includes a cooling arrangement selectively operable to cool the pebble bed (16), **in that** the turbine is a gas turbine, and **in that** the gas cooler comprises a heat exchanger.

2. A turbine bypass system according to claim 1, wherein the cooling arrangement is operable to cool the pebble bed (16) when the bypass path is inoperative.

3. A turbine bypass system according to claim 1 or claim 2, wherein the cooling arrangement is selectively operable to deliver fluid coolant to the pebble bed (16) to cool the pebble bed.

4. A turbine bypass system according to claim 1, wherein the cooling arrangement comprises a closed-loop cooling circuit (62) for recirculating the fluid coolant to the pebble bed (56) and a heat exchanger (64) for cooling the recirculating fluid coolant.

5. A thermal power plant including a turbine bypass system according to any preceding claim.

6. A method for operating a turbine bypass system, comprising:
delivering hot gases along a bypass path (10) to a gas cooler (12);
and passing the bypass gases through a pebble bed (16), positioned in the bypass path upstream of the gas cooler (12), to absorb heat from the bypass gases and thereby reduce the temperature of the bypass gases prior to delivery of the bypass gases to the gas cooler,
**characterized in that** the method further comprises the step of cooling the pebble bed (16), wherein the step of cooling the pebble bed is carried out when gases are not delivered along the bypass path (10) to the gas cooler (12), wherein the step of cooling the pebble bed (16) comprises delivering fluid coolant to the pebble bed, and wherein the step of cooling the pebble bed (16) comprises initially delivering gas coolant to the pebble bed and thereafter delivering liquid coolant to the pebble bed.

7. An operating method according to claim 6, wherein the step of cooling the pebble bed comprises recirculating fluid coolant to the pebble bed and extracting heat from the fluid coolant using a heat exchanger (64).

## Patentansprüche

1. Bypasssystem für Turbine, umfassend:
eine Turbine;
einen Bypasspfad (10), der selektiv betreibbar ist, um einem Gaskühler (12) heiße Gase zuzuführen; und
einen Kugelhaufen (16), der in dem Bypasspfad (10) stromaufwärts des Gaskühlers (12) positioniert und betreibbar ist, um Wärme von den Bypassgasen zu absorbieren und dadurch die Temperatur der Bypassgase vor der Abgabe der Bypassgase an den Gaskühler (12) zu reduzieren,
**dadurch gekennzeichnet, dass** das Bypasssystem für Turbine eine Kühlanordnung einschließt, die selektiv betreibbar ist, um den Kugelhaufen (16) zu kühlen, **dass** die Turbine eine Gasturbine ist und **dass** der Gaskühler einen Wärmetauscher umfasst.

2. Bypasssystem für Turbine nach Anspruch 1, wobei die Kühlanordnung betreibbar ist, um den Kugelhaufen (16) zu kühlen, wenn der Bypasspfad außer Betrieb ist.

3. Bypasssystem für Turbine nach Anspruch 1 oder Anspruch 2, wobei die Kühlanordnung selektiv betreibbar ist, um dem Kugelhaufen (16) flüssiges Kühlmittel zuzuführen, um den Kugelhaufen zu kühlen.

4. Bypasssystem für Turbine nach Anspruch 1, wobei die Kühlanordnung einen geschlossenen Kühlkreislauf (62) zum Rückführen des flüssigen Kühlmittels zu dem Kugelhaufen (56) und einen Wärmetauscher (64) zum Kühlen des rückgeführten flüssigen Kühlmittels umfasst.

5. Wärmekraftanlage einschließlich eines Bypasssystems für eine Turbine nach einem der vorstehenden Ansprüche.

6. Verfahren zum Betreiben eines Bypasssystems für eine Turbine, umfassend:
Zuführen heißer Gase entlang eines Bypasspfads (10) zu einem Gaskühler (12);
und Leiten der Bypassgase durch einen Kugelhaufen (16), der in dem Bypasspfad stromaufwärts des Gaskühlers (12) positioniert ist, um Wärme von den Bypassgasen zu absorbieren und dadurch die Temperatur der Bypassgase vor dem Zuführen der Bypassgase zu dem Gaskühler zu verringern,
**dadurch gekennzeichnet, dass** das Verfahren ferner den Schritt des Kühlens des Kugelhaufens (16) umfasst, wobei der Schritt des Kühlens des Kugelhaufens ausgeführt wird, wenn dem Gaskühler (12) keine Gase entlang des Bypasspfads (10) zugeführt werden, wobei der Schritt des Kühlens des Kugelhaufens (16) das Zuführen von flüssigem Kühlmittel zu dem Kugelhaufen umfasst, und wobei der Schritt des Kühlens des Kugelhaufen (16) das anfängliche Zuführen von gasförmigem Kühlmittel zu dem Kugelhaufen und danach das Zuführen von flüssigem Kühlmittel zu dem Kugelhaufen umfasst.

7. Betriebsverfahren nach Anspruch 6, wobei der Schritt des Kühlens des Kugelhaufens das Rückführen von flüssigem Kühlmittel zu dem Kugelhaufen und das Extrahieren von Wärme aus dem flüssigen Kühlmittel unter Verwendung eines Wärmetauschers (64) umfasst.

## Revendications

1. Système de dérivation de turbine, comprenant :
une turbine ;
un chemin de dérivation (10) sélectivement opérationnel pour libérer des gaz chauds à un refroidisseur de gaz (12) ; et
un lit de galets (16) positionné dans le chemin de dérivation (10) en amont du refroidisseur de gaz (12) lequel est opérationnel pour absorber de la chaleur provenant des gaz de dérivation et réduire de ce fait la température des gaz de dérivation avant libération des gaz de dérivation au refroidisseur de gaz (12),
**caractérisé en ce que** le système de dérivation de turbine inclut un agencement de refroidissement sélectivement opérationnel pour refroidir le lit de galets (16), **en ce que** la turbine est une turbine à gaz, et **en ce que** le refroidisseur de gaz comprend un échangeur thermique.

2. Système de dérivation de turbine selon la revendication 1, dans lequel l'agencement de refroidissement est opérationnel pour refroidir le lit de galets (16) lorsque le chemin de dérivation est non opérationnel.

3. Système de dérivation de turbine selon la revendication 1 ou la revendication 2, dans lequel l'agencement de refroidissement est sélectivement opérationnel pour libérer un agent réfrigérant fluide au lit de galets (16) pour refroidir le lit de galets.

4. Système de dérivation de turbine selon la revendication 1, dans lequel l'agencement de refroidissement comprend un circuit de refroidissement à boucle fermée (62) pour remettre en circulation l'agent réfrigérant fluide vers le lit de galets (56) et un échangeur thermique (64) pour refroidir l'agent réfrigérant fluide remis en circulation.

5. Centrale électrique thermique incluant un système de dérivation de turbine selon une quelconque revendication précédente.

6. Procédé d'exploitation d'un système de dérivation de turbine, comprenant :
la libération de gaz chauds le long d'un chemin de dérivation (10) à un refroidisseur de gaz (12) ; et le passage des gaz de dérivation à travers un lit de galets (16), positionné dans le chemin de dérivation en amont du refroidisseur de gaz (12), pour absorber de la chaleur provenant des gaz de dérivation et réduire de ce fait la température des gaz de dérivation avant libération des gaz de dérivation au refroidisseur de gaz,
**caractérisé en ce que** le procédé comprend en outre l'étape de refroidissement du lit de galets (16), dans lequel l'étape de refroidissement du lit de galets est effectuée lorsque des gaz ne sont pas libérés le long du chemin de dérivation (10) au refroidisseur de gaz (12), dans lequel l'étape de refroidissement du lit de galets (16) comprend la libération d'agent réfrigérant fluide au lit de galets, et dans lequel l'étape de refroidissement du lit de galets (16) comprend la libération initiale d'un agent réfrigérant gazeux au lit de galets et par la suite la libération d'un agent réfrigérant liquide au lit de galets.

7. Procédé d'exploitation selon la revendication 6, dans lequel l'étape de refroidissement du lit de galets comprend la remise en circulation d'un agent réfrigérant fluide vers le lit de galets et l'extraction de chaleur de l'agent réfrigérant fluide en utilisant un échangeur thermique (64).
